# EUROPÄISCHE PATENTSCHRIFT

(11) **EP 3 200 984 B1**
(45) Veröffentlichungstag und Bekanntmachung des Hinweises auf die Patenterteilung: **08.12.2021**
(21) Anmeldenummer: 15766434.3
(22) Anmeldetag: 15.09.2015
(51) Int. Cl.: B29C 64/205, B29C 64/218, B29C 64/236, B29C 64/153, B22F 10/10, B22F 12/00

(54) **VERFAHREN, VORRICHTUNG UND BESCHICHTUNGSMODUL ZUM HERSTELLEN EINES DREIDIMENSIONALEN OBJEKTS**
METHOD, DEVICE, AND COATING MODULE FOR PRODUCING A THREE-DIMENSIONAL OBJECT
PROCÉDÉ, DISPOSITIF ET MODULE DE REVÊTEMENT POUR LA RÉALISATION D'UN OBJET TRIDIMENSIONNEL

(30) Priorität: 29.10.2014 DE 102014222129
(43) Veröffentlichungstag der Anmeldung: 09.08.2017
(73) Patentinhaber: EOS GmbH Electro Optical Systems, 82152 Krailling (DE)
(72) Erfinder: PATERNOSTER, Stefan, 82346 Andechs (DE); GRÜNBERGER, Stefan, 81739 München (DE)
(74) Vertreter: Prüfer & Partner mbB Patentanwälte · Rechtsanwälte
(86) Internationale Anmeldenummer: PCT/EP2015/071045
(87) Internationale Veröffentlichungsnummer: WO 2016/066317

(56) Entgegenhaltungen:
- WO-A1-2006/033621
- WO-A1-2008/061764
- WO-A1-2013/092757
- WO-A2-2005/097476
- US-A1- 2002 195 747
- US-A1- 2010 228 381
- US-B1- 6 238 614
- None

## Beschreibung

Die vorliegende Erfindung bezieht sich auf ein Verfahren und eine Vorrichtung zum Herstellen eines dreidimensionalen Objektes durch selektives schichtweises Verfestigen von pulverförmigem Aufbaumaterial durch Energieeinbringung, sowie auf ein Beschichtungsmodul für eine derartige Vorrichtung.

Ein Verfahren dieser Art wird beispielsweise zum Rapid Prototyping, Rapid Tooling oder Rapid Manufacturing verwendet. Ein Beispiel eines solchen Verfahrens ist unter dem Namen "Selektives Lasersintern oder Laserschmelzen" bekannt. Dabei wird Pulver durch selektives Bestrahlen mit einem Laserstrahl selektiv verfestigt.

Zum Aufbringen des Pulvers ist in DE 199 28 245 A1 eine Vorrichtung mit einer hin und her bewegbaren Beschichtungseinrichtung beschrieben. Die Beschichtungseinrichtung enthält zwei voneinander beabstandete Beschichterklingen. In den Zwischenraum zwischen den Klingen wird pulverförmiges Aufbaumaterial gefüllt, das dann von den Beschichterklingen bei der Bewegung der Beschichtungseinrichtung zu einer glatten dünnen Schicht ausgezogen wird. Einige Pulvermaterialien sind jedoch stark kohäsiv und neigen daher leicht zu Klumpenbildung (Bildung von Agglomeraten).

WO 88/02677 A2 beschreibt ein Verfahren zum Herstellen von Teilen durch selektives Lasersintern, bei dem eine abgemessene Menge des pulverförmigen Aufbaumaterials von einer über ein Baufeld fahrenden gegenläufig rotierenden Walze über das Baufeld geschoben und dort zu einer glatten dünnen Schicht ausgewalzt wird. Durch die rotierende Walze werden eventuell vorhandene Agglomerate aufgebrochen. Dabei wird zur Sicherheit jedoch immer mehr Pulver von der Walze transportiert, als zum Aufbringen der Schicht erforderlich ist. Das nach dem Schichtauftrag übrig gebliebene Pulver kann entsorgt werden, was den Pulververbrauch erhöht, oder in einen Pulvervorrat zurückgeführt werden, was den Arbeitsaufwand erhöht. WO 2006/033621 A1 beschreibt ein Verfahren und eine Vorrichtung zum Herstellen eines dreidimensionalen Objekts durch schichtweises Aufbringen und selektives Verfestigen eines pulverförmigen Aufbaumaterials mit einer Beschichtungseinrichtung.

Die Aufgabe der vorliegenden Erfindung besteht darin, ein alternatives, bevorzugt verbessertes, Verfahren und eine dementsprechende Vorrichtung zum Herstellen eines dreidimensionalen Objekts bereitzustellen. Insbesondere ist es im Rahmen dessen erwünscht, dass dabei die Qualität der aufgebrachten Schicht verbessert ist, bevorzugt ohne dass der Pulververbrauch oder Arbeitsaufwand erhöht ist.

Die Aufgabe wird gelöst durch ein Verfahren gemäß Anspruch 1, ein Beschichtungsmodul gemäß Anspruch 13 und eine Vorrichtung gemäß Anspruch 14. Weiterbildungen der Erfindung sind jeweils in den Unteransprüchen angegeben. Dabei können die Verfahren auch durch die untenstehenden bzw. in den Unteransprüchen ausgeführten Merkmale der Vorrichtungen weitergebildet sein oder umgekehrt.

Das erfindungsgemäße Verfahren zum Herstellen eines dreidimensionalen Objekts durch schichtweises Aufbringen und selektives Verfestigen eines pulverförmigen Aufbaumaterials enthält die Schritte: Aufbringen einer Schicht des Aufbaumaterials auf ein Baufeld in einer Arbeitsebene mittels einer sich in einer Bewegungsrichtung über die Arbeitsebene bewegenden Beschichtervorrichtung, selektives Verfestigen der aufgebrachten Schicht des Aufbaumaterials an Stellen, die einem Querschnitt des herzustellenden Objekts entsprechen, und Wiederholen dieser beiden Schritte, bis das Objekt fertiggestellt ist. Dabei ist das Aufbaumaterial während des Aufbringens der Schicht in einer an der Beschichtervorrichtung angeordneten Beschichtungseinheit in einem Raum zwischen zwei voneinander in der Bewegungsrichtung der Beschichtervorrichtung beabstandeten Beschichtungselementen bevorratet. Mindestens ein Beschichtungselement, erfindungsgemäss ein jeweils in Bewegungsrichtung der Beschichtervorrichtung hinteres Beschichtungselement, enthält eine Walze, über die das Aufbaumaterial auf die Arbeitsebene aufgetragen wird. Mit diesem Verfahren ist es möglich, Agglomerate aufzubrechen und so auch bei stark kohäsivem Pulver eine gleichmäßige Schicht zu erzeugen. Es wird jeweils nur soviel Pulver verbraucht, wie zum Erzeugen der Schicht erforderlich ist, der Rest verbleibt in dem Raum zwischen den Beschichtungselementen für die nächste Schicht.

Vorzugsweise wird die Walze während des Auftragens der Schicht gedreht, in weiter bevorzugter Weise dergestalt, dass ihre Bewegungsrichtung an der Oberfläche der Pulverschicht gleich der Bewegungsrichtung der Beschichtervorrichtung ist. Durch diese Drehbewegung, insbesondere die Scherwirkung bei gleicher Bewegungsrichtung der Unterseite der Walze und der Beschichtervorrichtung, können Agglomerate des Aufbaumaterials besonders wirkungsvoll zerstört werden.

Vorzugsweise enthält das Beschichtungselement, das die Walze umfasst, über die das Aufbaumaterial auf die Arbeitsebene aufgetragen wird, ferner ein Abstreifelement, das an der Walze anhaftendes Pulver von der Walze abstreift. Dadurch wird verhindert, dass Pulver von einem höher gelegenen (beispielsweise dem höchsten) Punkt der Walze in Bezug auf die Arbeitsebene aus auf die bereits aufgebrachte und geglättete, in Bewegungsrichtung hinter der Walze liegende, Schicht gelangt.

Vorzugsweise enthält das Beschichtungselement, das die Walze umfasst, über die das Aufbaumaterial auf die Arbeitsebene aufgetragen wird, ferner in Bewegungsrichtung der Beschichtervorrichtung hinter der Walze eine Klingenvorrichtung, die das Pulver weiter verdichtet. Damit kann eine größere Verdichtung des Pulvers erzielt werden als mit der Walze alleine.

Vorzugsweise weist die Klingenvorrichtung an ihrer der Arbeitsebene im Wesentlichen zugewandten Unterseite eine Oberfläche auf, die mindestens bereichsweise winkelig zur Arbeitsebene ausgerichtet ist und bevorzugt in Richtung zu der zugeordneten Walze hin ansteigt. Damit kann eine größere Verdichtung erzielt werden als mit einer ganz parallel zu der Arbeitsebene verlaufenden Unterseite.

Vorzugsweise ist das in Bewegungsrichtung der Beschichtervorrichtung vordere Beschichtungselement im Wesentlichen spiegelsymmetrisch zu dem hinteren Beschichtungselement gebildet. Dadurch kann in den zwei entgegengesetzten Beschichtungsrichtungen dieselbe Art von Schichtauftrag durchgeführt werden. Auch eine teilweise spiegelsymmetrische Ausbildung der beiden Beschichtungselemente kann vorteilhaft sein. So können die beiden Beschichtungselemente beispielsweise gegengleich ausgebildet und gestaltet sein, jedoch in unterschiedlichen Höhen in Bezug auf die Arbeitsebene angeordnet sein. Auch eine Verlängerung eines der Beschichtungselemente in dieser Höhendimension ist zum Beispiel möglich. Insgesamt können auch nur einzelne Elemente der vorderen und hinteren Beschichtungseinheiten für sich alleine genommen spiegelsymmetrisch ausgebildet und/oder angeordnet sein.

Ergänzend kann das in Bewegungsrichtung der Beschichtervorrichtung vordere Beschichtungselement eine Walze, deren Durchmesser und/oder deren Rotationsgeschwindigkeit und/oder deren Oberflächenbeschaffenheit von der Walze des hinteren Beschichtungselements verschieden ist, enthalten.

Dadurch kann in den zwei entgegengesetzten Beschichtungsrichtungen eine unterschiedliche Art von Schichtauftrag durchgeführt werden. Auch kann analog (alternativ oder ergänzend zur unterschiedlichen Ausgestaltung der Walzen) das in Bewegungsrichtung der Beschichtervorrichtung vordere Beschichtungselement eine Klingenvorrichtung umfassen, deren Abmessung und/oder Oberflächenbeschaffenheit und/oder Positionierung von einer Klingenvorrichtung des hinteren Beschichtungselements verschieden ist.

Das in Bewegungsrichtung der Beschichtervorrichtung vordere Beschichtungselement kann auch eine Klingenvorrichtung und keine Walze enthalten. Auch dadurch kann beispielsweise in den zwei entgegengesetzten Beschichtungsrichtungen eine unterschiedliche Art von Schichtauftrag durchgeführt werden.

Vorzugsweise weist die eben erwähnte Klingenvorrichtung an ihrer der Arbeitsebene im Wesentlichen zugewandten Unterseite eine Oberfläche auf, die mindestens bereichsweise winkelig zur Arbeitsebene ausgerichtet ist und bevorzugt in Richtung zu dem hinteren Beschichtungselement hin ansteigt. Damit kann eine größere Verdichtung erzielt werden als mit einer ganz parallel zu der Arbeitsebene verlaufenden Unterseite.

Vorzugsweise wird das vordere und/oder das hintere Beschichtungselement ganz oder in Teilen höhenverstellt. Dadurch kann die Flexibilität des Verfahrens erhöht werden. Beispielsweise kann eine Walze eines Beschichtungselements relativ zu einer Klingenvorrichtung dieses oder des jeweils anderen Beschichtungselements höhenverstellbar ausgebildet sein, um eine feingenaue Einstellung der gewünschten Schichtdicke im Verhältnis zu der nachfolgenden Verdichtung der Schicht erreichen zu können u.v.m. Weiterhin ist es möglich, die Beschichtungsvorrichtung parallel zur Arbeitsebene um mindestens 180° drehbar auszugestalten. Dadurch kann bei einer Hin- und Herbewegung der Beschichtungsvorrichtung über die Arbeitsebene immer das eine Beschichtungselement in Bewegungsrichtung vorne und das andere immer hinten angeordnet werden.

Vorzugsweise wird die Walze des vorderen und/oder hinteren Beschichtungselements beheizt. Dadurch kann das Pulver schon während des Auftragens vorgewärmt werden, etwa um zügiger eine für die selektive Verfestigung notwendige bzw. geeignete Temperatur des Pulvers zu erreichen.

Vorzugsweise ist der zwischen den Beschichtungselementen liegende Raum groß genug, um eine Menge des pulverförmigen Aufbaumaterials aufzunehmen, die zumindest zum Aufbringen einer kompletten Pulverschicht ausreichend ist, vorzugsweise zum Aufbringen mehrerer Pulverschichten. Als eine komplette Pulverschicht wird dabei eine solche Pulverschicht verstanden, die sich in Bewegungsrichtung mindestens über das gesamte Baufeld erstreckt. Dadurch ist es möglich, eine bzw. mehrere Beschichtungsfahrten durchzuführen, ohne zwischendurch zur Aufnahme neuen Pulvers zu dem Vorratsbehälter zurückfahren zu müssen. Ein erfindungsgemäßes Beschichtungsmodul ist zum Aus- und/oder Nachrüsten einer Vorrichtung zum Herstellen eines dreidimensionalen Objekts durch schichtweises Aufbringen und selektives Verfestigen eines pulverförmigen Aufbaumaterials geeignet. Die Vorrichtung umfasst eine zur Aufnahme des Beschichtungsmoduls geeignete und über die Arbeitsebene bewegbare Beschichtervorrichtung zum Aufbringen einer Schicht des Aufbaumaterials auf ein Baufeld in einer Arbeitsebene und eine Verfestigungsvorrichtung zum selektiven Verfestigen der aufgebrachten Schicht des Aufbaumaterials an Stellen, die einem Querschnitt des herzustellenden Objekts entsprechen. Die Vorrichtung ist ausgebildet und/oder gesteuert, das Aufbringen und Verfestigen zu wiederholen, bis das Objekt fertiggestellt ist. In dem Beschichtungsmodul ist das Aufbaumaterial in einem Raum zwischen zwei voneinander in der Bewegungsrichtung der Beschichtervorrichtung beabstandeten Beschichtungselementen bevorratbar. Mindestens ein Beschichtungselement, erfindungsgemäss ein jeweils in Bewegungsrichtung der Beschichtervorrichtung hinteres Beschichtungselement enthält eine Walze, über die das Aufbaumaterial auf die Arbeitsebene auftragbar ist. Ein solches Beschichtungsmodul kann flexibel in eine Vorrichtung zum Herstellen eines dreidimensionalen Objekts eingebaut werden und diese in die Lage versetzen, das erfindungsgemäße Verfahren zu verwirklichen.

Eine erfindungsgemäße Vorrichtung zum Herstellen eines dreidimensionalen Objekts durch schichtweises Aufbringen und selektives Verfestigen eines pulverförmigen Aufbaumaterials umfasst eine über die Arbeitsebene bewegbare Beschichtervorrichtung zum Aufbringen einer Schicht des Aufbaumaterials auf ein Baufeld in einer Arbeitsebene und eine Verfestigungsvorrichtung zum selektiven Verfestigen der aufgebrachten Schicht des Aufbaumaterials an Stellen, die einem Querschnitt des herzustellenden Objekts entsprechen. Die Vorrichtung ist ausgebildet und/oder gesteuert, das Aufbringen und Verfestigen zu wiederholen, bis das Objekt fertiggestellt ist. Die Beschichtervorrichtung enthält mindestens eine Beschichtungseinheit, in der das Aufbaumaterial in einem Raum zwischen zwei voneinander in der Bewegungsrichtung der Beschichtervorrichtung beabstandeten Beschichtungselementen bevorratbar ist. Mindestens ein Beschichtungselement, erfindungsgemäss ein jeweils in Bewegungsrichtung der Beschichtervorrichtung hinteres Beschichtungselement enthält eine Walze, über die das Aufbaumaterial auf die Arbeitsebene auftragbar ist. Mit einer solchen Vorrichtung kann das erfindungsgemäße Verfahren verwirklicht werden.

Vorzugsweise ist die Beschichtungseinheit der Vorrichtung ein auswechselbares Beschichtungsmodul. Dadurch kann je nach verwendetem Pulver ein geeignetes Modul ausgewählt und flexibel in der Vorrichtung angebracht werden.

Weitere Merkmale und Zweckmäßigkeiten der Erfindung ergeben sich aus der Beschreibung von Ausführungsbeispielen anhand der beigefügten Zeichnungen.
- Fig. 1: ist eine schematische, teilweise im Schnitt dargestellte Ansicht eines Ausführungsbeispiels einer Vorrichtung zum schichtweisen Herstellen eines dreidimensionalen Objekts, die zum Durchführen eines erfindungsgemäßen Verfahrens geeignet ist.
- Fig. 2: ist eine schematische perspektivische Ansicht einer Beschichtungseinheit gemäß einer ersten Ausführungsform der vorliegenden Erfindung.
- Fig. 3: ist eine schematische perspektivische Ansicht einer Beschichtungseinheit gemäß einer zweiten Ausführungsform der vorliegenden Erfindung.
- Fig. 4: ist eine schematische perspektivische Ansicht einer Beschichtungseinheit gemäß einer Abwandlung der zweiten Ausführungsform.
- Fig. 5: ist eine schematische perspektivische Ansicht einer Beschichtungseinheit gemäß einer dritten Ausführungsform der vorliegenden Erfindung.
- Fig. 6: ist eine schematische perspektivische Ansicht einer Beschichtungseinheit gemäß einer vierten Ausführungsform der vorliegenden Erfindung.
- Fig. 7: ist eine schematische Blockdarstellung des Ablaufs eines Ausführungsbeispiels eines erfindungsgemäßen Verfahrens.

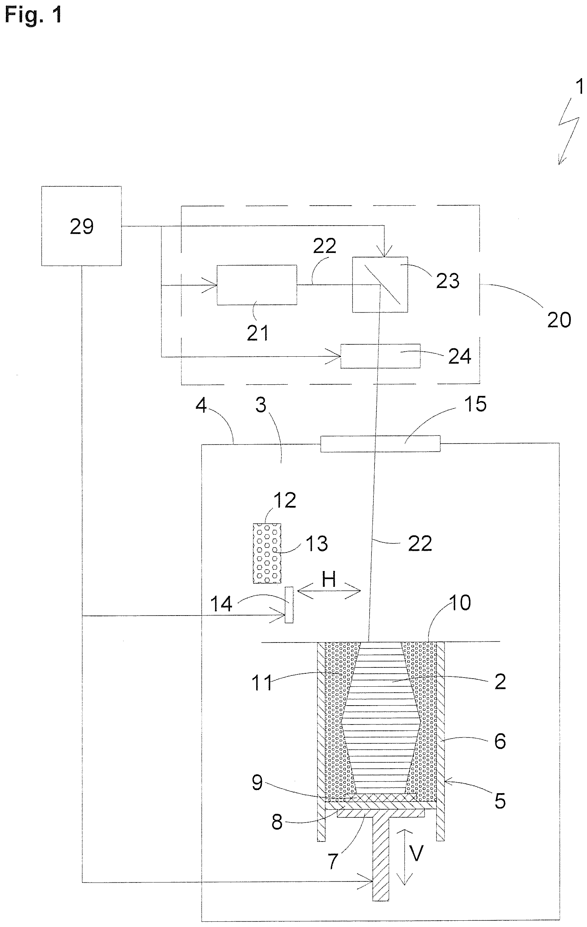

Im Folgenden wird mit Bezug auf Fig. 1 ein Ausführungsbeispiel einer Vorrichtung 1 beschrieben, die zum Durchführen eines erfindungsgemäßen Verfahrens geeignet ist. Die in Fig. 1 dargestellte Vorrichtung ist eine Lasersinter- oder Laserschmelzvorrichtung 1. Zum Aufbauen eines Objekts 2 enthält sie eine Prozesskammer 3 mit einer Kammerwandung 4.

In der Prozesskammer 3 ist ein nach oben offener Behälter 5 mit einer Wandung 6 angeordnet. In dem Behälter 5 ist ein in einer vertikalen Richtung V bewegbarer Träger 7 angeordnet, an dem eine Grundplatte 8 angebracht ist, die den Behälter 5 nach unten abschließt und damit dessen Boden bildet. Die Grundplatte 8 kann eine getrennt von dem Träger 7 gebildete Platte sein, die an dem Träger 7 befestigt ist, oder sie kann integral mit dem Träger 7 gebildet sein. Je nach verwendetem Pulver und Prozess kann auf der Grundplatte 8 noch eine Bauplattform 9 angebracht sein, auf der das Objekt 2 aufgebaut wird. Das Objekt 2 kann aber auch auf der Grundplatte 8 selber aufgebaut werden, die dann als Bauplattform dient. In Fig. 1 ist das in dem Behälter 5 auf der Bauplattform 9 zu bildende Objekt 2 unterhalb einer Arbeitsebene 10 in einem Zwischenzustand dargestellt mit mehreren verfestigten Schichten, umgeben von unverfestigt gebliebenem Aufbaumaterial 11.

Die Lasersintervorrichtung 1 enthält weiter einen Vorratsbehälter 12 für ein durch elektromagnetische Strahlung verfestigbares pulverförmiges Aufbaumaterial 13 und einen in einer horizontalen Richtung H bewegbaren Beschichter 14 zum Aufbringen des Aufbaumaterials 13 auf die Arbeitsebene 10. An ihrer Oberseite enthält die Wandung 4 der Prozesskammer 3 ein Einkoppelfenster 15 für die zum Verfestigen des Pulvers 13 dienende Strahlung 22.

Die Lasersintervorrichtung 1 enthält ferner eine Belichtungsvorrichtung 20 mit einem Laser 21, der einen Laserstrahl 22 erzeugt, der über eine Umlenkvorrichtung 23 umgelenkt und durch eine Fokussiervorrichtung 24 über das Einkoppelfenster 15 auf die Arbeitsebene 10 fokussiert wird.

Weiter enthält die Lasersintervorrichtung 1 eine Steuereinheit 29, über die die einzelnen Bestandteile der Vorrichtung 1 in koordinierter Weise zum Durchführen des Bauprozesses gesteuert werden. Die Steuereinheit kann eine CPU enthalten, deren Betrieb durch ein Computerprogramm (Software) gesteuert wird. Das Computerprogramm kann getrennt von der Vorrichtung auf einem Speichermedium gespeichert sein, von dem aus es in die Vorrichtung, insbesondere in die Steuereinheit geladen werden kann.

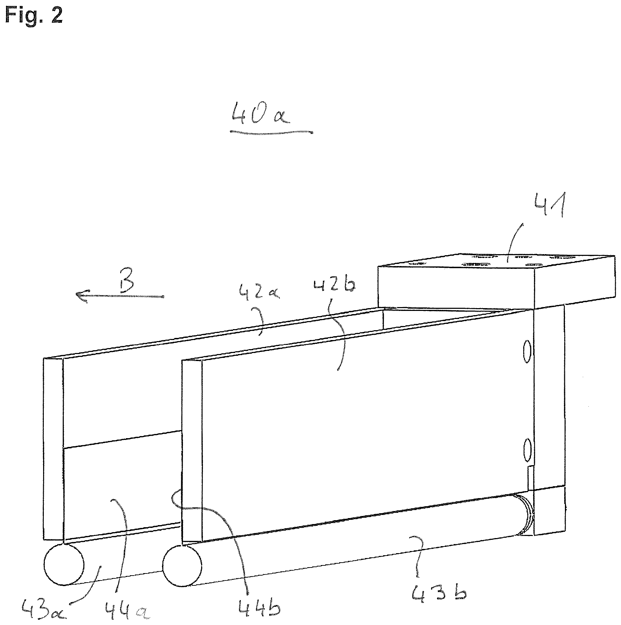

Fig. 2 zeigt in einer schematischen perspektivischen Ansicht eine Beschichtungseinheit 40a, die in dem Beschichter 14 enthalten ist.

Die Beschichtungseinheit 40a enthält eine Halterung 41, über die sie an dem Beschichter 14 (etwa an einer nicht dargestellten Verfahreinheit des Beschichters 14) anbringbar ist. Weiter enthält die Beschichtungseinheit 40a zwei im Wesentlichen parallele, plattenförmige Beschichtungselemente 42a, 42b, die sich im Wesentlichen senkrecht zu der Arbeitsebene 10 und senkrecht zu der Bewegungsrichtung B des Beschichters 14 erstrecken und die in der Bewegungsrichtung B des Beschichters 14 voneinander beabstandet sind. In den Figuren 2 bis 6 führt die Bewegungsrichtung B des Beschichters 14 schräg in die Zeichnungsebene hinein, so dass in der Bewegungsrichtung B das Beschichtungselement 42a das vordere Beschichtungselement und das Beschichtungselement 42b das hintere Beschichtungselement ist.

Die beiden voneinander beabstandeten Beschichtungselemente 42a, 42b begrenzen in und entgegen der Beschichtungsrichtung B einen Raum, der zur Aufnahme von pulverförmigem Aufbaumaterial 13 aus dem Vorratsbehälter 12 dient. Dieser Raum ist auch quer zu der Bewegungsrichtung B begrenzt, was aber in den Figuren der Übersichtlichkeit halber nicht gezeigt ist. Der zwischen den Beschichtungselementen 42a, 42b liegende Raum ist groß genug, um eine Pulvermenge aufzunehmen, die zumindest zum Aufbringen einer Pulverschicht ausreichend ist, vorzugsweise zum Aufbringen mehrerer Schichten.

Zum Aufbringen des in dem Raum zwischen den Beschichtungselementen 42a, 42b aufgenommenen Pulvers, also Aufbaumaterials 13, auf die Arbeitsebene 10 enthält jedes Beschichtungselement unterseitig (also in Richtung der Arbeitsebene 10 gewandt) eine drehbar gelagerte Walze 43a, 43b, deren Längsachse (= Drehachse) parallel zu der Arbeitsebene 10 und quer zu der Bewegungsrichtung B des Beschichters 14 verläuft. Weiter sind an der Innenseite jedes Beschichtungselements 42a, 42b (der jeweils dem anderen Beschichtungselement zugewandten Seite) Abstreifer 44a, 44b angeordnet, beispielsweise in Form dünner Bleche oder Kaptonstreifen, die den Spalt oberhalb der Walzen 43a, 43b überbrücken. Schließlich ist ein (in den Figuren nicht gezeigter) Antrieb (beispielsweise ein motorbasierter Antrieb, ein Antrieb über Zahnstangen oder ein Seilantrieb) bereitgestellt, um die Walzen 43a, 43b in Drehung zu versetzen.

Im Betrieb wird zum Aufbringen einer Pulverschicht zunächst der Träger 7 um eine Höhe abgesenkt, die der gewünschten Schichtdicke entspricht. Unter Verwendung des Beschichters 14 wird nun eine Schicht des pulverförmigen Aufbaumaterials 13 aufgetragen.

Die Aufbringung erfolgt zumindest über den gesamten Querschnitt des herzustellenden Objekts 2, vorzugsweise über das gesamte Baufeld, also den Bereich der Arbeitsebene 10, der innerhalb der oberen Öffnung des Behälters 5 liegt. Anschließend wird der Querschnitt des herzustellenden Objekts 2 von dem Laserstrahl 22 abgetastet, so dass das pulverförmige Aufbaumaterial 13 an den Stellen verfestigt wird, die dem Querschnitt des herzustellenden Objekts 2 entsprechen. Diese Schritte werden solange wiederholt, bis das Objekt 2 fertiggestellt ist und dem Bauraum entnommen werden kann.

Das Aufbringen der Pulverschicht erfolgt dadurch, dass der Beschichter 14 horizontal in der Bewegungsrichtung B über die Arbeitsebene 10 fährt. Dabei fährt er zunächst zu dem Vorratsbehälter 12, wo er eine vorbestimmte Menge an Pulver aufnimmt und in dem Raum zwischen den Beschichtungselementen 42a, 42b speichert. Dann fährt er über das Baufeld. Dabei verbleibt von dem in dem Raum zwischen den Beschichtungselementen 42a, 42b aufgenommenen pulverförmigen Aufbaumaterial 13 auf dem Baufeld eine Schicht, deren Dicke dem vertikalen Abstand zwischen der Unterseite der Walzen 43a, 43b und der Oberseite des Trägers 7 oder der zuvor aufgebrachten Schicht entspricht, also der Höhe, um die der Träger vorher abgesenkt worden war. Da der zwischen den Beschichtungselementen 42a, 42b liegende Raum groß genug ist, um eine Pulvermenge aufzunehmen, die zumindest zum Aufbringen einer Pulverschicht ausreichend ist, vorzugsweise zum Aufbringen mehrerer Schichten, ist es möglich, eine bzw. mehrere Beschichtungsfahrten durchzuführen, ohne zwischendurch zur Aufnahme neuen Pulvers zu dem Vorratsbehälter 12 zurückfahren zu müssen.

Während des Verfahrens des Beschichter 14 werden die Walzen 43a, 43b in Drehung versetzt. Dadurch wird eine gleichmäßig geglättete Schicht erzielt. Die Abstreifer verhindern dabei, dass durch die Drehung der Walzen Pulver von dem höchsten (bzw. einem höheren) Punkt der Walze aus auf die bereits aufgebrachte und geglättete Schicht gelangt.

Die Drehgeschwindigkeit der Walzen ist vorzugsweise stufenlos einstellbar. Die Drehrichtung kann dabei so gewählt sein, dass die Bewegungsrichtung der Walze an der Oberfläche des Pulvers gleich der Bewegungsrichtung des Beschichters 14 ist (sogenannte gegenläufige Walze). Der dadurch erzielte Schereffekt erhöht die Wirkung des Aufbrechens der Agglomerate.

Da die Walze in der Beschichtungseinheit nicht die Aufgabe hat, Pulver von einem Vorratsbehälter aus über das gesamte Baufeld zu transportieren, sondern das Pulver von oben über den Zwischenraum zwischen den beiden Beschichtungselementen zugeführt wird, kann der Walzendurchmesser im Vergleich zum eingangs beschriebenen Stand der Technik von den dort verwendeten Werten von 50 mm bis 80 mm deutlich verkleinert sein, beispielsweise auf 10 mm bis 18 mm.

Die in Fig. 2 gezeigte Beschichtungseinheit 40a ist im Wesentlichen spiegelsymmetrisch gebildet. Somit kann eine Beschichtung entgegen der in Fig. 2 gezeigten Beschichtungsrichtung B in gleicher Weise durchgeführt werden wie in der Beschichtungsrichtung B.

Die beiden Beschichtungselemente der Beschichtungseinheit 40a können jedoch auch von einander verschiedene Walzen enthalten, die sich beispielsweise in ihrem Durchmesser und/oder ihrer Rotationsgeschwindigkeit und/oder ihrer Oberflächenbeschaffenheit unterscheiden. Dadurch können je nach Beschichterrichtung unterschiedliche Arten von Schichtaufträgen durchgeführt werden. Beispielsweise kann zunächst in einer Beschichterrichtung eine Vorbeschichtung und dann in der entgegengesetzten Richtung eine Nachbeschichtung erfolgen, die mit unterschiedlichen Parametern durchgeführt werden.

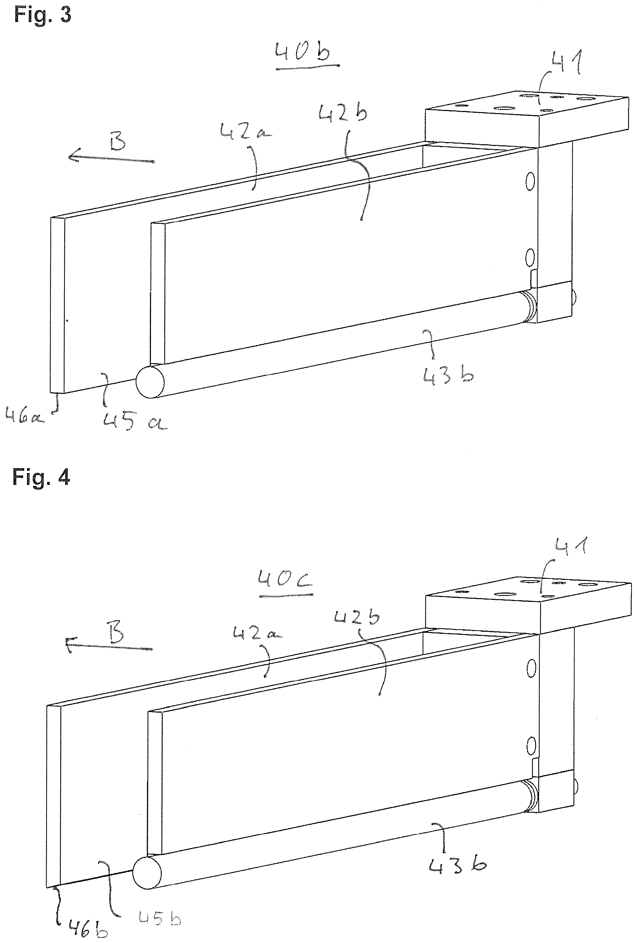

Fig. 3 zeigt eine Beschichtungseinheit 40b gemäß einer zweiten Ausführungsform. Diese Beschichtungseinheit 40b unterscheidet sich von der in Fig. 2 gezeigten Beschichtungseinheit 40a darin, dass nur das in der Bewegungsrichtung B des Beschichters 14 hintere Beschichtungselement 42b eine Walze 43b enthält, das vordere Beschichtungselement 42a jedoch nicht.

Das vordere Beschichtungselement 42a enthält stattdessen eine Klingenvorrichtung 45a, die im einfachsten Fall, wie in der Abbildung gezeigt, durch eine Verlängerung des plattenförmigen Beschichtungselements 42a nach unten gebildet ist. Diese Klinge kann einerseits dazu dienen, die verfestigten Abschnitte der vorhergehenden Pulverschicht zu glätten und vorspringende Teile zu beseitigen. Andererseits können aber auch ähnlich wie bei der oben beschriebenen unsymmetrischen Ausbildung der Beschichtungseinheit 40a je nach Beschichterrichtung unterschiedliche Arten von Schichtaufträgen durchgeführt werden.

Bei der in Fig. 3 gezeigten Beschichtungseinheit 40b ist die der Arbeitsebene 10 zugewandte Unterseite 46a der Klingenvorrichtung 45a parallel zu der Arbeitsebene 10. Damit ergibt sich ein scherungsarmer Pulverauftrag ohne Verdichtung.

Bei einer Fig. 4 gezeigten Beschichtungseinheit 40c gemäß einer Abwandlung der zweiten Ausführungsform verläuft die der Arbeitsebene 10 zugewandte Unterseite 46b der Klingenvorrichtung 45b jedoch in einem Winkel zu der Arbeitsebene 10. Dabei steigt die Unterseite in Richtung zu dem hinteren Beschichtungselement 42 hin an, also entgegen der in Fig. 4 gezeigten Beschichterrichtung B. Damit wird bei einer Beschichtung entgegen der Richtung B, also einem Pulverauftrag durch die Klingenvorrichtung 45b, eine Verdichtung des aufgetragenen Pulvers erzielt.

Die Unterseite der Klingenvorrichtung kann auch so ausgebildet sein, dass sie sowohl einen parallel zur Arbeitsebene verlaufenden Abschnitt als auch einen im Winkel zur Arbeitsebene verlaufenden Abschnitt enthält. Außer einer geneigten Fläche kann der nicht parallel zur Arbeitebene verlaufende Abschnitt oder die gesamte Unterseite der Klingenvorrichtung auch eine konvexe Rundung oder eine an eine konvexe Rundung angepasste mehrfach eckige Oberfläche aufweisen.

Der Begriff "Klingenvorrichtung" ist hierbei nicht auf die Verlängerung des plattenförmigen Beschichtungselement 42a nach unten eingeschränkt. Eine Klingenvorrichtung kann auch eine separate Klinge, einen Kamm, ein Messer, eine Bürste, eine Rakel oder Ähnliches enthalten.

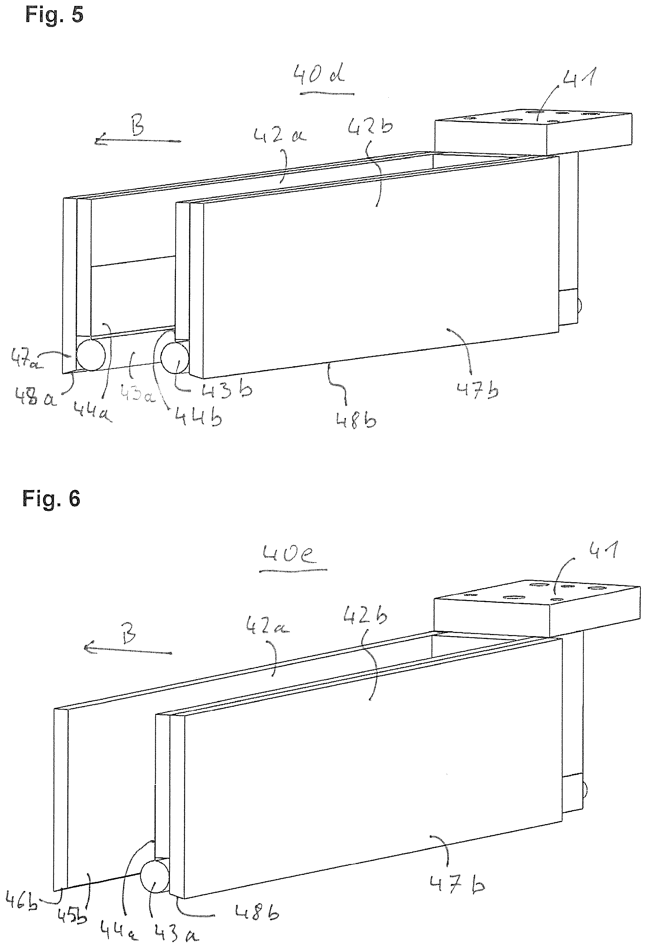

Fig. 5 zeigt eine Beschichtungseinheit 40d gemäß einer dritten Ausführungsform. Diese Beschichtungseinheit 40d unterscheidet sich von der in Fig. 2 gezeigten Beschichtungseinheit 40a darin, dass die beiden Beschichtungselemente 42a, 42b an ihren voneinander abgewandten Außenseiten je eine zusätzliche Klingenvorrichtung 47a, 47b enthalten. Die Unterseiten 48a, 48b der zusätzlichen Klingenvorrichtungen 47a, 47b liegen um einen vorbestimmten Wert tiefer als die Unterseiten der Walzen 43a, 43b. Da sie bei einem Pulverauftrag mit den Walzen (in der Beschichtungsrichtung B für die Walze 43b, entgegen der Beschichtungsrichtung B für die Walze 43a) hinter den Walzen liegen, können sie dazu dienen, die durch die Walzen aufgetragene Pulverschicht weiter zu verdichten.

Ähnlich wie bei den Beschichtungseinheiten 40b und 40c kann jede der Unterseiten der zusätzlichen Klingenvorrichtungen so ausgebildet sein, dass sie parallel zur Arbeitsebene ist (wie in Fig. 5 am Beispiel der Unterseite 48b der Klingenvorrichtung 47b gezeigt), dass sie in einem Winkel zur Arbeitsebene verläuft (wie am Beispiel der Unterseite 48a der Klingenvorrichtung 47a gezeigt, die in Richtung zu der zugeordneten Walze 43a hin ansteigt), oder dass sie sowohl einen parallel zur Arbeitsebene verlaufenden Abschnitt als auch einen im Winkel zur Arbeitsebene verlaufenden Abschnitt enthält. Dadurch ergeben sich dieselben Wirkungen wie bei den Beschichtungseinheiten 40b und 40c.

Außer einer geneigten Fläche kann der nicht parallel zur Arbeitebene verlaufende Abschnitt oder die gesamte Unterseite der Klingenvorrichtung auch eine konvexe Rundung oder eine an eine konvexe Rundung angepasste mehrfach eckige Oberfläche aufweisen. Auch hier kann der Begriff "Klingenvorrichtung" eine Klinge, einen Kamm, ein Messer, eine Bürste, eine Rakel oder Ähnliches enthalten.

Ebenso wie bei der in Fig. 2 gezeigten Beschichtungseinheit 40a kann auch die Beschichtungseinheit 40e im Wesentlichen spiegelsymmetrisch gebildet sein oder voneinander verschiedene Walzen enthalten.

Fig. 6 zeigt eine Beschichtungseinheit 40e gemäß einer vierten Ausführungsform. Bei der Beschichtungseinheit 40e enthält das Beschichtungselement 42b eine zusätzliche Klingenvorrichtung 47b wie bei der in Fig. 5 gezeigten Beschichtungseinheit 40d, während das Beschichtungselement 42a statt einer Walze nur eine Klingenvorrichtung 45b enthält wie bei der in Fig. 4 gezeigten Beschichtungseinheit 40c.

Auch sonst können Merkmale der verschiedenen Ausführungsformen miteinander kombiniert sein, wo dies möglich und gemäß den vorliegenden Ansprüchen ist.

In den oben beschriebenen Ausführungsformen ist die Beschichtungseinheit jeweils als auswechselbares Beschichtungsmodul beschrieben, das an dem Beschichter angebracht und von ihm gelöst werden kann. Die Beschichtungseinheit kann jedoch auch integral mit dem Beschichter gebildet sein.

Die Ausbildung als auswechselbares Beschichtungsmodul hat allerdings den zusätzlichen Vorteil, dass verschiedene Beschichtungsmodule gemäß den oben beschriebenen Ausführungsformen bereit gestellt und schnell und flexibel gegeneinander ausgetauscht werden können. Neben mechanischen Größen wie dem Abstand der Beschichtungselemente oder dem Durchmesser der Walzen können dabei beispielsweise auch die Oberflächenbeschaffenheit der Walzen oder die erzielbaren Walzentemperaturen oder Drehgeschwindigkeiten variiert werden. Dabei kann das zu verwendende Beschichtungsmodul je nach Art des verwendeten Pulvers ausgewählt werden.

Die Form der Beschichtungselemente ist nicht auf die beschriebene Plattenform und die Ausrichtung senkrecht zur Arbeitsebene eingeschränkt. Die Beschichtungselemente können eine beliebige Form und Lage haben, die geeignet sind, einen Raum für pulverförmiges Aufbaumaterial zu begrenzen. Insbesondere kann die seitliche Begrenzung des Pulvervorrats in und/oder entgegen der Bewegungsrichtung des Beschichters auch allein durch die Walze gebildet sein, wenn diese einen hinreichend großen Durchmesser hat.

Eines der Beschichtungselemente oder beide können höhenverstellbar angeordnet sein.

Eine Walze oder beide Walzen können beheizbar sein.

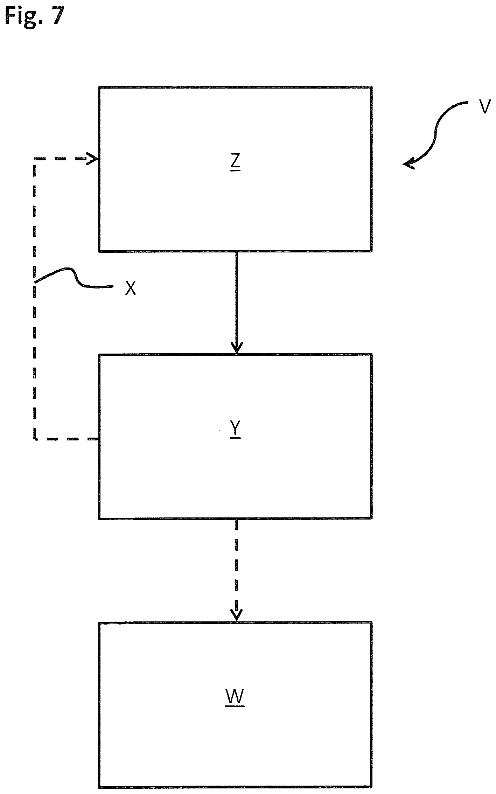

Fig. 7 zeigt in schematischer Blockdarstellung den Ablauf eines Ausführungsbeispiels des erfindungsgemäßen Verfahrens V. Dabei wird auf die Nummerierung in den vorhergehenden Figuren rekurriert. In einem ersten Schritt Z wir eine Schicht eines Aufbaumaterials 13 auf ein Baufeld in einer Arbeitsebene 10 mittels einer sich in der Bewegungsrichtung B über die Arbeitsebene 10 bewegenden (erfindungsgemäßen) Beschichtervorrichtung 14 aufgebracht. In einem zweiten Schritt Y wird die aufgebrachte Schicht des Aufbaumaterials 13 an Stellen, die einem Querschnitt des herzustellenden Objekts 2 entsprechen, selektiv verfestigt. Die beiden Schritte Z und Y werden durch Wiederholungen X solange wiederholt, bis das Objekt 2 fertiggestellt ist. Diese Fertigstellung ist mit dem letzten Schritt W bezeichnet.

Auch wenn die vorliegende Erfindung anhand einer Lasersinter- bzw. Laserschmelzvorrichtung beschrieben wurde, ist sie nicht auf das Lasersintern oder Laserschmelzen eingeschränkt. Sie kann auf beliebige Verfahren zum Herstellen eines dreidimensionalen Objektes durch schichtweises Aufbringen und selektives Verfestigen eines pulverförmigen Aufbaumaterials angewendet werden.

Der Laser kann beispielsweise einen Gas- oder Festkörperlaser oder jede andere Art von Laser umfassen. Allgemein kann jede Einrichtung verwendet werden, mit der Energie selektiv auf eine Schicht des Aufbaumaterials aufgebracht werden kann. Anstelle eines Lasers können beispielsweise eine andere Lichtquelle, ein Elektronenstrahl oder jede andere Energie- bzw. Strahlenquelle verwendet werden, die geeignet ist, das Aufbaumaterial zu verfestigen. Auch auf das selektive Maskensintern, bei dem eine ausgedehnte Lichtquelle und eine Maske verwendet werden, oder auf das Absorptions- bzw. Inhibitionssintern kann die Erfindung angewendet werden.

Anstelle des Einbringens von Energie kann das selektive Verfestigen des aufgetragenen Aufbaumaterials auch durch 3D-Drucken erfolgen, beispielsweise durch Aufbringen eines Klebers. Allgemein bezieht sich die Erfindung auf das Herstellen eines Objekts mittels schichtweisen Auftragens und selektiven Verfestigens eines pulverförmigen Aufbaumaterials unabhängig von der Art und Weise, in der das Aufbaumaterial verfestigt wird.

Es können verschiedene Arten von Pulver verwendet werden, insbesondere Metallpulver, Kunststoffpulver, Keramikpulver, Sand, gefüllte oder gemischte Pulver.

## Patentansprüche

1. Verfahren (V) zum Herstellen eines dreidimensionalen Objekts (2) durch schichtweises Aufbringen und selektives Verfestigen eines pulverförmigen Aufbaumaterials (13) mit den Schritten:
a) Aufbringen (Z) einer Schicht des Aufbaumaterials (13) auf ein Baufeld in einer Arbeitsebene (10) mittels einer sich in einer Bewegungsrichtung (B) über die Arbeitsebene bewegenden Beschichtervorrichtung (14),
b) selektives Verfestigen (Y) der aufgebrachten Schicht des Aufbaumaterials (13) an Stellen, die einem Querschnitt des herzustellenden Objekts (2) entsprechen, und
c) Wiederholen (X) der Schritte a) und b), bis das Objekt (2) fertiggestellt ist,
wobei das Aufbaumaterial während des Schritts a) in einer an der Beschichtervorrichtung (14) angeordneten Beschichtungseinheit (40a-e) in einem Raum zwischen zwei voneinander in der Bewegungsrichtung der Beschichtervorrichtung beabstandeten Beschichtungselementen (42a, 42b) bevorratet ist und
wobei zumindest das Beschichtungselement, das in der Bewegungsrichtung (B) der Beschichtervorrichtung (14) das hintere Beschichtungselement (42b) ist, eine Walze (43a, 43b) enthält, über die das Aufbaumaterial auf die Arbeitsebene aufgetragen wird.

2. Verfahren gemäß Anspruch 1, bei dem
die Walze (43a, 43b) in Schritt a) gedreht wird, vorzugsweise dergestalt, dass ihre Bewegungsrichtung an der Oberfläche der Pulverschicht gleich der Bewegungsrichtung (B) der Beschichtervorrichtung (14) ist.

3. Verfahren gemäß Anspruch 1 oder 2, bei dem
das Beschichtungselement (42a, 42b), das die Walze umfasst, über die das Aufbaumaterial auf die Arbeitsebene aufgetragen wird, ferner ein Abstreifelement (44a, 44b) enthält, das an der Walze anhaftendes Pulver von der Walze abstreift.

4. Verfahren gemäß einem der Ansprüche 1 bis 3, bei dem
das Beschichtungselement (42a, 42b), das die Walze (43a, 43b) umfasst, über die das Aufbaumaterial auf die Arbeitsebene aufgetragen wird, ferner in Bewegungsrichtung (B) der Beschichtervorrichtung hinter der Walze eine Klingenvorrichtung (47a, 47b) enthält, die das Pulver verdichtet.

5. Verfahren gemäß Anspruch 4, bei dem
die Klingenvorrichtung (47a, 47b) an ihrer der Arbeitsebene (10) im Wesentlichen zugewandten Unterseite eine Oberfläche (48a, 48b) aufweist, die mindestens bereichsweise winkelig zur Arbeitsebene (10) ausgerichtet ist und bevorzugt in Richtung zu der zugeordneten Walze (43a, 43b) hin ansteigt.

6. Verfahren gemäß einem der Ansprüche 1 bis 5, bei dem
das in Bewegungsrichtung (B) der Beschichtervorrichtung (14) vordere Beschichtungselement (42a) im Wesentlichen spiegelsymmetrisch zu dem hinteren Beschichtungselement (42b) gebildet ist.

7. Verfahren gemäß einem der Ansprüche 1 bis 6, bei dem
das in Bewegungsrichtung (B) der Beschichtervorrichtung vordere Beschichtungselement (42a) eine Walze (43a) enthält, deren Durchmesser und/oder deren Rotationsgeschwindigkeit und/oder deren Oberflächenbeschaffenheit von der Walze (43b) des hinteren Beschichtungselements (42b) verschieden ist.

8. Verfahren gemäß einem der Ansprüche 1 bis 5, bei dem
das in Bewegungsrichtung (B) der Beschichtervorrichtung vordere Beschichtungselement (42a) eine Klingenvorrichtung (45a, 45b) enthält und keine Walze.

9. Verfahren gemäß Anspruch 8, bei dem
die Klingenvorrichtung (45b) an ihrer der Arbeitsebene (10) im Wesentlichen zugewandten Unterseite eine Oberfläche (46b) aufweist, die mindestens bereichsweise winkelig zur Arbeitsebene (10) ausgerichtet ist und bevorzugt in Richtung zu dem hinteren Beschichtungselement (42b) hin ansteigt.

10. Verfahren gemäß einem der Ansprüche 1 bis 9, bei dem
das vordere und/oder das hintere Beschichtungselement (42a, 42b) ganz oder in Teilen höhenverstellt wird.

11. Verfahren gemäß einem der Ansprüche 1 bis 10, bei dem
die Walze (43a, 43b) des vorderen und/oder hinteren Beschichtungselements (42a, 42b) beheizt wird.

12. Verfahren gemäß einem der Ansprüche 1 bis 11, bei dem
der zwischen den Beschichtungselementen (42a, 42b) liegende Raum groß genug ist, um eine Menge des pulverförmigen Aufbaumaterials (13) aufzunehmen, die zumindest zum Aufbringen einer Pulverschicht ausreichend ist, vorzugsweise zum Aufbringen mehrerer Pulverschichten.

13. Beschichtungsmodul (40a-40e) zum Aus- und/oder Nachrüsten einer Vorrichtung (1) zum Herstellen eines dreidimensionalen Objekts (2) durch schichtweises Aufbringen und selektives Verfestigen eines pulverförmigen Aufbaumaterials (13), wobei die Vorrichtung umfasst:
eine zur Aufnahme des Beschichtungsmoduls geeignete und über die Arbeitsebene (10) bewegbare Beschichtervorrichtung (14) zum a) Aufbringen (Z) einer Schicht des Aufbaumaterials (13) auf ein Baufeld in einer Arbeitsebene (10) und
eine Verfestigungsvorrichtung (20) zum b) selektiven Verfestigen (Y) der aufgebrachten Schicht des Aufbaumaterials an Stellen, die einem Querschnitt des herzustellenden Objekts (2) entsprechen, und
die Vorrichtung ausgebildet und/oder gesteuert ist, die Schritte a) und b) zu wiederholen, bis das Objekt (2) fertiggestellt ist,
wobei in dem Beschichtungsmodul (40a-40e) das Aufbaumaterial in einem Raum zwischen zwei voneinander in der Bewegungsrichtung (B) der Beschichtervorrichtung beabstandeten Beschichtungselementen (42a, 42b) bevorratbar ist und
zumindest das Beschichtungselement, das in der Bewegungsrichtung (B) der Beschichtervorrichtung (14) das hintere Beschichtungselement (42b) ist, eine Walze (43a, 43b) enthält, über die das Aufbaumaterial auf die Arbeitsebene auftragbar ist.

14. Vorrichtung (1) zum Herstellen eines dreidimensionalen Objekts (2) durch schichtweises Aufbringen und selektives Verfestigen eines pulverförmigen Aufbaumaterials (13), umfassend:
eine über die Arbeitsebene (10) bewegbare Beschichtervorrichtung (14) zum a) Aufbringen (Z) einer Schicht des Aufbaumaterials (13) auf ein Baufeld in einer Arbeitsebene (10) und
eine Verfestigungsvorrichtung (20) zum b) selektiven Verfestigen (Y) der aufgebrachten Schicht des Aufbaumaterials an Stellen, die einem Querschnitt des herzustellenden Objekts entsprechen, wobei
die Vorrichtung ausgebildet und/oder gesteuert ist, die Schritte a) und b) zu wiederholen, bis das Objekt (2) fertiggestellt ist, und wobei
die Beschichtervorrichtung (14) eine Beschichtungseinheit (40a-40e) enthält, in der das Aufbaumaterial in einem Raum zwischen zwei voneinander in der Bewegungsrichtung (B) der Beschichtervorrichtung beabstandeten Beschichtungselementen (42a, 42b) bevorratbar ist und
zumindest das Beschichtungselement, das in der Bewegungsrichtung (B) der Beschichtervorrichtung (14) das hintere Beschichtungselement (42b) ist, eine Walze (43a, 43b) enthält, über die das Aufbaumaterial auf die Arbeitsebene auftragbar ist.

15. Vorrichtung (1) gemäß Anspruch 14, bei der die Beschichtungseinheit (40a-40e) ein auswechselbares Beschichtungsmodul ist.

## Claims

1. A method (V) for producing a three-dimensional object (2) by layer-wise applying and selectively solidifying a building material (13) in powder form, including the steps:
a) applying (Z) a layer of the building material (13) onto a build area in a working plane (10) by means of a recoating device (14) moving in a moving direction (B) across the working plane,
b) selectively solidifying (Y) the applied layer of the building material (13) at positions that correspond to a cross-section of the object (2) to be produced, and
c) repeating (X) the steps a) and b) until the object (2) is completed,
wherein the building material is stored during step a) in a recoating unit (40a-e) arranged at the recoating device (14) within a space between two recoating elements (42a, 42b) mutually spaced apart from each other in the moving direction of the recoating device, and
wherein at least the recoating element, which is the recoating element (42b) arranged rearward with respect to the moving direction (B) of the recoating device (14), includes a roller (43a, 43b) by means of which the building material is applied to the working plane.

2. The method according to claim 1, wherein
the roller (43a, 43b) is rotated during step a), preferably in such a manner that its moving direction at the surface of the powder layer is equal to the moving direction (B) of the recoating device (14).

3. The method according to claim 1 or 2, wherein
the recoating element (42a, 42b), which comprises the roller by means of which the building material is applied to the working plane, further includes a stripping element (44a, 44b) that strips powder adhering to the roller from the roller.

4. The method according to one of claims 1 to 3, wherein
the recoating element (42a, 42b), which comprises the roller (43a, 43b) by means of which the building material is applied to the working plane, further includes a blade device (47a, 47b) arranged rearward of the roller in the moving direction (B) of the recoating device, which blade device densifies the powder.

5. The method according to claim 4, wherein
the blade device (47a, 47b) includes a surface (48a, 48b) at its bottom side substantially facing the working plane (10), which surface is at least in a region thereof oblique with respect to the working plane (10), and which preferably slopes upwards in a direction towards the associated roller (43a, 43b).

6. The method according to one of claims 1 to 5, wherein
the recoating element (42a) arranged in front with respect to the moving direction (B) of the recoating device (14) is designed substantially mirror-symmetric with respect to the rearward recoating element (42b).

7. The method according to one of claims 1 to 6, wherein
the recoating element (42a) arranged in front with respect to the moving direction (B) of the recoating device includes a roller (43a), the diameter and/or the rotational velocity and/or the surface characteristics of which is different from the roller (43b) of the rearward recoating element (42b).

8. The method according to one of claims 1 to 5, wherein
the recoating element (42a) arranged in front with respect to the moving direction (B) of the recoating device includes a blade device (45a, 45b) and no roller.

9. The method according to claim 8, wherein
the blade device (45b) includes a surface (46b) at its bottom side substantially facing the working plane (10), which surface is at least in a region thereof oblique with respect to the working plane (10), and which preferably slopes upwards in a direction towards the rearward recoating element (42b).

10. The method according to one of claims 1 to 9, wherein
the frontward and/or rearward recoating element (42a, 42b) is adjusted in its height completely or in parts.

11. The method according to one of claims 1 to 10, wherein
the roller (43a, 43b) of the frontward and/or rearward recoating element (42a, 42b) is heated.

12. The method according to one of claims 1 to 11, wherein
the space arranged between the recoating elements (42a, 42b) is large enough to receive an amount of the building material in powder form (13) sufficient to apply at least one powder layer, preferably sufficient to apply several powder layers.

13. A recoating module (40a-e) for equipping and/or retrofitting a device (1) for producing a three-dimensional object (2) by layer-wise applying and selectively solidifying a building material in powder form (13), wherein the device comprises:
a recoating device (14) suitable for receiving the recoating module and being movable across the working plane (10) for a) applying (Z) a layer of the building material (13) onto a build area within a working plane (10), and
a solidification device (20) for b) selectively solidifying (Y) the applied layer of the building material at positions that correspond to a cross-section of the object (2) to be produced, and
the device is configured and/or controlled to repeat the steps a) and b) until the object (2) is completed,
wherein in the recoating module (40a-e) the building material can be stored within a space between two recoating elements (42a, 42b) mutually spaced apart from each other in the moving direction (B) of the recoating device, and
at least the recoating element, which is the recoating element (42b) arranged rearward with respect to the moving direction (B) of the recoating device (14), includes a roller (43a, 43b) by means of which the building material can be applied to the working plane.

14. A device (1) for producing a three-dimensional object (2) by layer-wise applying and selectively solidifying a building material in powder form (13), comprising
a recoating device (14) movable across a working plane (10) for a) applying (Z) a layer of the building material (13) onto a build area within the working plane (10), and
a solidification device (20) for b) selectively solidifying (Y) the applied layer of the building material at positions that correspond to a cross-section of the object to be produced, wherein
the device is configured and/or controlled to repeat the steps a) and b) until the object (2) is completed, and wherein
the recoating device (14) includes a recoating unit (40a-e) in which the building material can be stored within a space between two recoating elements (42a, 42b) mutually spaced apart from each other in the moving direction (B) of the recoating device, and
at least the recoating element, which is the recoating element (42b) arranged rearward with respect to the moving direction (B) of the recoating device (14), includes a roller (43a, 43b) by means of which the building material can be applied to the working plane.

15. The device (1) according to claim 14, wherein the recoating unit (40a-e) is a replaceable recoating module.

## Revendications

1. Procédé (V) pour fabriquer un objet (2) tridimensionnel par application couche par couche et solidification sélective d'un matériau de construction (13) pulvérulent comprenant les étapes :
a) d'application (Z) d'une couche du matériau de construction (13) sur un champ de construction dans un plan de travail (10) au moyen d'un dispositif de revêtement (14) se déplaçant dans une direction de déplacement (B) au-dessus du plan de travail,
b) de solidification sélective (Y) de la couche appliquée du matériau de construction (13) à des endroits qui correspondent à une section transversale de l'objet (2) à fabriquer, et
c) de répétition (X) des étapes a) et b), jusqu'à ce que l'objet (2) soit achevé,
dans lequel le matériau de construction est stocké pendant l'étape a) dans une unité de revêtement (40a-e) disposée sur le dispositif de revêtement (14) dans un espace entre deux éléments de revêtement (42a, 42b) espacés l'un de l'autre dans la direction de déplacement du dispositif de revêtement et
dans lequel au moins l'élément de revêtement qui est l'élément de revêtement arrière (42b) dans la direction de déplacement (B) du dispositif de revêtement (14) contient un rouleau (43a, 43b), par l'intermédiaire duquel le matériau de construction est appliqué sur le plan de travail.

2. Procédé selon la revendication 1, selon lequel
le rouleau (43a, 43b) est amené en rotation à l'étape a), de préférence de telle sorte que sa direction de déplacement sur la surface de la couche de poudre est identique à la direction de déplacement (B) du dispositif de revêtement (14).

3. Procédé selon la revendication 1 ou 2, selon lequel
l'élément de revêtement (42a, 42b), qui comprend le rouleau par l'intermédiaire duquel le matériau de construction est appliqué sur le plan de travail, contient en outre un élément de raclage (44a, 44b), qui racle du rouleau la poudre adhérant au rouleau.

4. Procédé selon l'une quelconque des revendications 1 à 3, selon lequel
l'élément de revêtement (42a, 42b), qui comprend le rouleau (43a, 43b) par l'intermédiaire duquel le matériau de construction est appliqué sur le plan de travail, contient en outre dans la direction de déplacement (B) du dispositif de revêtement derrière le rouleau un dispositif à lame (47a, 47b), qui compacte la poudre.

5. Procédé selon la revendication 4, selon lequel
le dispositif à lame (47a, 47b) présente sur sa face inférieure sensiblement tournée vers le plan de travail (10) une surface (48a, 48b), qui est orientée au moins par endroits de manière angulaire par rapport au plan de travail (10) et monte de préférence en direction du rouleau (43a, 43b) associé.

6. Procédé selon l'une quelconque des revendications 1 à 5, selon lequel
l'élément de revêtement avant (42a) dans la direction de déplacement (B) du dispositif de revêtement (14) est formé de manière sensiblement spéculairement symétrique par rapport à l'élément de revêtement arrière (42b).

7. Procédé selon l'une quelconque des revendications 1 à 6, selon lequel
l'élément de revêtement avant (42a) dans la direction de déplacement (B) du dispositif de revêtement contient un rouleau (43a), dont le diamètre et/ou dont la vitesse de rotation et/ou dont la propriété de surface est différente du rouleau (43b) de l'élément de revêtement arrière (42b).

8. Procédé selon l'une quelconque des revendications 1 à 5, selon lequel
l'élément de revêtement avant (42a) dans la direction de déplacement (B) du dispositif de revêtement contient un dispositif à lame (45a, 45b) et aucun rouleau.

9. Procédé selon la revendication 8, selon lequel
le dispositif à lame (45b) présente sur sa face inférieure sensiblement tournée vers le plan de travail (10) une surface (46b), qui est orientée de manière angulaire au moins par endroits par rapport au plan de travail (10) et monte de préférence en direction de l'élément de revêtement arrière (42b).

10. Procédé selon l'une quelconque des revendications 1 à 9, selon lequel
l'élément de revêtement avant et/ou arrière (42a, 42b) est réglé en hauteur entièrement ou partiellement.

11. Procédé selon l'une quelconque des revendications 1 à 10, selon lequel
le rouleau (43a, 43b) de l'élément de revêtement avant et/ou arrière (42a, 42b) est chauffé.

12. Procédé selon l'une quelconque des revendications 1 à 11, selon lequel
l'espace situé entre les éléments de revêtement (42a, 42b) est suffisamment grand pour recevoir une quantité du matériau de construction (13) pulvérulent, qui est suffisante au moins pour l'application d'une couche de poudre, de préférence pour l'application de plusieurs couches de poudre.

13. Module de revêtement (40a-40e) pour équiper et/ou rééquiper un dispositif (1) pour fabriquer un objet (2) tridimensionnel par application couche par couche et solidification sélective d'un matériau de construction (13) pulvérulent, dans lequel le dispositif comprend :
un dispositif de revêtement (14) adapté à la réception du module de revêtement et mobile au-dessus du plan de travail (10) pour a) l'application (Z) d'une couche du matériau de construction (13) sur un champ de construction dans un plan de travail (10) et
un dispositif de solidification (20) pour b) la solidification sélective (Y) de la couche appliquée du matériau de construction en des endroits qui correspondent à une section transversale de l'objet (2) à fabriquer, et
le dispositif est réalisé et/ou commandé pour répéter les étapes a) et b) jusqu'à ce que l'objet (2) soit achevé,
dans lequel dans le module de revêtement (40a-40e) le matériau de construction peut être stocké dans un espace entre deux éléments de revêtement (42a, 42b) espacés l'un de l'autre dans la direction de déplacement (B) du dispositif de revêtement et
au moins l'élément de revêtement, qui est l'élément de revêtement arrière (42b) dans la direction de déplacement (B) du dispositif de revêtement (14), contient un rouleau (43a, 43b), par l'intermédiaire duquel le matériau de construction peut être appliqué sur le plan de travail.

14. Dispositif (1) pour fabriquer un objet (2) tridimensionnel par application couche par couche et solidification sélective d'un matériau de construction (13) pulvérulent, comprenant :
un dispositif de revêtement (14) mobile au-dessus du plan de travail (10) pour a) l'application (Z) d'une couche du matériau de construction (13) sur un champ de construction dans un plan de travail (10) et
un dispositif de solidification (20) pour b) la solidification sélective (Y) de la couche appliquée du matériau de construction en des endroits qui correspondent à une section transversale de l'objet à fabriquer, dans lequel
le dispositif est réalisé et/ou commandé pour répéter les étapes a) et b) jusqu'à ce que l'objet (2) ait été achevé, et dans lequel
le dispositif de revêtement (14) contient une unité de revêtement (40a-40e), dans laquelle le matériau de construction peut être stocké dans un espace entre deux éléments de revêtement (42a, 42b) espacés l'un de l'autre dans la direction de déplacement (B) du dispositif de revêtement et
au moins l'élément de revêtement qui est l'élément de revêtement arrière (42b) dans la direction de déplacement (B) du dispositif de revêtement (14) contient un rouleau (43a, 43b), par l'intermédiaire duquel le matériau de construction peut être appliqué sur le plan de travail.

15. Dispositif (1) selon la revendication 14, pour lequel l'unité de revêtement (40a-40e) est un module de revêtement interchangeable.
